# EUROPEAN PATENT APPLICATION

(11) **EP 4 389 272 A1**
(43) Date of publication of application: **26.06.2024**
(21) Application number: 22214747.2
(22) Date of filing: 19.12.2022
(51) Int. Cl.: B01F 27/272, B01F 27/86, B01F 35/50, G01N 33/68

(54) **REACTION VESSEL WITH STATOR INSERT AND ROTOR**

(71) Applicant: Prosperodes GmbH, 38124 Braunschweig (DE)
(72) Inventor: Ritter, Christiane, 38124 Braunschweig (DE); Lührs, Thorsten, 38124 Braunschweig (DE)
(74) Representative: Godemeyer Blum Lenze Patentanwälte Partnerschaft mbB - werkpatent

(57) **Abstract**

Reaction vessel comprising a housing (1) having a first end (2,) section for connecting to a lid (40) and an opposite second end (3) section closed by a bottom wall (4), ribs (14) inside the housing (1) for a central opening (164) that is adapted to receive the stator (10), a stator (10) arranged inside the housing (1), a rotor (20) having a cylindrical section (21) arranged within the stator (10), a shaft (30) having a first end (31) to which a magnetic shaft drive (33) is fixed and an opposite second end (32) covered by and fixed to the rotor (20), wherein the shaft (30) is run in a first bearing (35) of the bearing block (39), wherein the first bearing (35) is arranged on the shaft (30) in an axial section arranged between the magnetic shaft drive (33) and the rotor (20, wherein preferably the first end (31) of the shaft (30) is a free end and is arranged in a recess (42) of a lid (40), the shaft (30) free end and the recess (42) of a lid (40) forming a second bearing (50), which is a frictional bearing, wherein the shaft (30), the magnetic shaft drive (33), the first bearing (35) and the second bearing (50) on which the shaft (30) is run, the rotor (20), the stator (10), preferably the extension of the stator (10) and/or the detection section (5, 6), are arranged co-axially about a longitudinal axis of the housing (1).

## Description

The present invention relates to a device that is a reaction vessel suitable for exerting a defined shear force onto a liquid sample, a method for producing the reaction vessel, and to a process using the device for exerting a defined shear force onto a sample, preferably including optical analysis of the sample through a portion of the reaction vessel.

The reaction vessel contains a rotor run on a bearing, optionally on exactly one bearing, the rotor having an axle which at one end has a driving section, suitable for receiving rotational torque from a drive motor that can be arranged adjacent to or at a distance from the driving section. Preferentially the bearing is arranged at a distance from a level of the liquid sample to be arranged in the vessel such that the bearing is not in contact with the liquid.

The reaction vessel contains a stator arranged co-axially with the rotor generating a defined gap between rotor and stator, allowing the application of a defined shear stress to the liquid. The shear stress is proportional to the rotation frequency of the rotor, the radius of the rotor, and the viscosity of the liquid, and the shear stress is inversely proportional to the gap width between rotor and stator.

The reaction vessel allows for the circulation of the liquid sample driven by the rotation of the rotor, which acts as a centrifugal pumping element. The geometry of the vessel is designed in a way that the maximum shear stress is applied to the liquid in the section with the minimal gap width between rotor and stator.

The reaction vessel comprises a detection section, preferably arranged at its bottom end, which is at least in part optically transmissible, e.g. for light irradiating the inner volume of the reaction vessel and for detecting radiation passing through and/or radiation emitted from the inner volume of the reaction vessel.

The reaction vessel has the advantage of being producible by arranging its elements in a manner that is pre-determined by the shape of the elements. Some of the elements of the reaction vessel, especially all of its elements except for magnets and preferably a drive shaft, can be produced by injection moulding of plastics. Accordingly, the reaction vessel can be produced from single components, preferably produced by injection moulding of synthetic resin, by arranging the elements for friction fit and/or form fit, preferably by moving elements of the reaction vessel against one another for friction fit until abutting stop faces.

### State of the art

WO 2012/110570 A1 schematically shows a reaction vessel in which a rotor is run on an axle that is run on a bearing located at the lid covering the vessel and a second bearing located at the bottom of the lid, with the rotor having a conical form that is parallel to the conically tapering bottom section of the vessel. In the alternative, the vessel is run on one sleeve arranged in the upper half of a cylindrical vessel, with the rotor extending into a tube section, open at both ends, which tube section is spaced from the rotor and is arranged in the lower half of the vessel with a spacing from the vessel bottom.

WO 2016/001334 A1 shows a reaction vessel within which a stator is inserted with a spacing from the vessel wall and spacing from the central rotor. The rotor is cylindrical with chamfered circumferential edges. The stator has extensions below its portion enclosing the rotor, and a light source and a detector are directed at 90° to one another and at 45° to the common central axis, and are directed into the space formed by the extensions.

### Object of the invention

An object of the invention is to provide an alternative reaction vessel that is suitable for exerting shear stress onto a liquid, and an alternative process for exerting shear force onto a liquid by using the reaction vessel. A preferred object is to provide a reaction vessel that is set up for effectively exerting shear force on the entire volume of liquid contained in the vessel, and to provide a vessel that allows optical detection of a representative portion of the liquid, wherein the vessel can be assembled from elements that can be produced separately, e.g. by injection moulding of plastics, and magnets as part of a drive and a metal drive shaft.

### Description of the invention

The invention achieves the object by the features of the claims, and specifically by providing a reaction vessel that is suitable for use in subjecting the entire volume of a liquid contained in the vessel to shear force, while the vessel is set up for circulating the liquid through the vessel, the vessel comprising or essentially consisting of
- a housing which extends along a central longitudinal axis, the housing having a first end section for connecting to a lid and an opposite second end section closed by a bottom wall, and arranged at the second end a detection section which in the housing wall has at least one window section, preferably two window sections e.g. arranged opposite to one another or at an angle of 90° to one another, wherein window sections are optically transparent and preferably plan, wherein the detection section preferably is arranged adjacent to the bottom wall,
- the housing containing at least three ribs that extend inside the housing along the housing wall and project towards the longitudinal axis, the ribs adjacent the housing first end having a first section and adjacent thereto having a second section, the second sections of the ribs extending towards the longitudinal axis for delimiting a central opening about the longitudinal axis, which central opening is adapted to receive the stator, and with the first section of at least one of the ribs, preferably of each rib, extending further towards the longitudinal axis than its second section, with a stop face formed between the first section and the second section of at least one the ribs, wherein preferably the first section and the second section of each rib are arranged in parallel to the longitudinal axis and along one common straight line each,
- a stator which is arranged inside the housing, which stator has a cylindrical inner surface for receiving a rotor with a constant spacing, the cylindrical surface having an open first end cross-section and an opening at its opposite second end, e.g. an open second end cross-section, wherein the outer surface of the stator is arranged with a spacing from the housing, wherein the stator with form fit and/or frictional fit is arranged with its first end abutting the stop face formed between the first section and the second section of at least one the ribs, wherein the stator is arranged with frictional fit and/or with form fit between the second sections of at least three ribs, wherein the ribs, the stator and the housing wall delimit a channel outside of the stator, which channel at both of its ends has open terminal cross-sections, wherein preferably the outer circumferential surface of the stator is cylindrical and more preferably the terminal cross-sections of the stator consist of ring-shaped surfaces which are perpendicular to the central longitudinal axis, which surfaces optionally are chamfered,
- wherein optionally the stator with its second end cross-sectional opening is arranged directly adjacent to the detection section or with a spacing from the detection section,
- wherein optionally the stator at its second end has an opening extending over the entire cross-section or a terminal section tapering towards an opening discharging to the detection section, the opening terminating directly adjacent to the detection section or with a spacing from the detection section,
- a rotor having or consisting of a cylindrical section arranged within the stator, the rotor and the stator being spaced by a ring-shaped gap of constant radius, the rotor having a second end that covers the second end of the shaft and which has a flat front face and a bevelled or rounded circumferential edge or which has a rounded front face, preferably the rotor at its first end having a terminal circumferential collar extending over the radius of the cylindrical rotor section and the collar with a spacing from the stator preferably extending over the first end cross-sectional opening of the stator and/or over the cylindrical surface of the stator, the collar accordingly with a spacing extending over the ring-shaped gap formed between the rotor and the stator,
- wherein the first end cross-section of the housing is covered by a one-piece bearing block containing a first bearing for a shaft, the first end section of which shaft is connected to a shaft drive and the opposite second end of the shaft is connected to the rotor, wherein the bearing block is connected to the housing by form fit and/or frictional fit, which bearing block preferably has a first stop face that abuts against a lid and an opposite second stop face that abuts against the first end of the housing,
- a shaft having a first end to which a magnetic shaft drive is fixed and an opposite second end covered by and fixed to the rotor, wherein the shaft is run in a first bearing of the bearing block, wherein the first bearing is arranged on the shaft in an axial section arranged between the magnetic shaft drive and the rotor, wherein preferably the first end of the shaft is a free end and is arranged in a recess of a lid, the shaft free end and the recess of a lid forming a second bearing, which is a frictional bearing,
- wherein the shaft, the magnetic shaft drive, the first bearing and the second bearing on which the shaft is run, the rotor, the stator, preferably the extension of the stator and/or the detection section, are arranged co-axially about a longitudinal axis of the housing,
- preferably a lid covering the first end section of the housing, the lid preferably connected to the bearing block and/or to the housing by form fit and/or frictional fit, the lid preferably having a recess arranged coaxially to the housing, wherein the lid preferably has cylindrical side walls clamping to a cylindrical section of the bearing block and/or clamping to a cylindrical section of the first end section of the housing.

The stop face that is formed between the first section and the second section of at least one of the ribs, preferably between the first section and the second section of at least three ribs, by the first section extending further to the central longitudinal axis than the second section, is arranged adjacent the second end of the stator, such that the stop face of at least one rib, preferably of each rib, contacts the second end of the stator. During assembly of the reaction vessel, the stator is moved along the longitudinal axis from the first end of the housing towards the second end of the housing until abutting the stop face. The second sections of at least three ribs extending to the same radial distance from the central longitudinal axis form at least three contact surfaces for clamping between them the stator, such that the stator is held by frictional fit and/or by form fit with its inner cylindrical wall rotationally and preferably also its outer circumferential cylindrical wall coaxial, i.e. rotationally symmetrical, to the central longitudinal axis.

The first sections of the ribs preferably extend into the same distance from the central longitudinal axis and between them leave a free volume that is set up to allow a liquid to flow through, which free volume is connected to the channel formed between the outer surface of the stator and the housing and is connected to the opening of the second end of the stator. As there is no relative movement between the stator and the housing in the spacing that forms the channel for liquid, there is significantly lower shear force in this channel, e.g. essentially no significant shear force in comparison to the shear force generated between the rotor and the stator, so that in the channel between the stator and the housing liquid can return to the gap between rotor and stator without being exposed to any relevant shear force. For example, for a channel width of 1mm at a stator outer radius of 2.8 mm and a spacing of the rotor from its stator of 0.3 mm at a rotor radius of 1.5 mm, the shear force occurring in the channel is less than 1% of the shear force generated between rotor and stator at 3000 rpm. Preferably, the spacing of the stator from the housing is at least as large as the ring-shaped gap between the rotor and the stator, preferably larger by a factor of at least 1.5, e.g. larger by a factor of up to 3, in order to generate the maximum shear force between rotor and stator and to avoid significant shear forces when liquid flows through the spacing between stator and housing.

The first end cross-section of the housing spans the entire cross section of the first end of the housing. The bearing block can be connected to the housing first end by form fit, preferably clamped by friction fit, to the circumferential surface of the housing, preferably to the inner surface of the housing.

Generally preferred, the inner cross-section of the housing, except for the ribs, is cylindrical, e.g. with the same diameter along the section of the longitudinal axis along which the first sections and second sections of the ribs extend, and with the same or with a larger diameter in the section of the longitudinal axis extending from the second section of the ribs to the first end cross section of the housing. Generally preferred, the second sections of the ribs extend over the detection section only. At least one detection window, preferably at least two detection windows, are each formed by an optically transparent plan wall section of constant thickness of the detection section.

Preferably, the housing including its bottom wall and the ribs and the at least one detection window are comprised of one piece, which is preferably produced by injection moulding, e.g. of an optically transparent synthetic resin. The stator, preferably produced by injection moulding, is arranged with friction fit and/or form fit between the second sections of the ribs, with the second end of the stator abutting against the stop face formed by the first section of at least one of the ribs.

The magnetic shaft drive is arranged on the shaft, e.g. fixed by form fit and/or frictional fit, with a spacing from the bearing block, and preferably with a spacing from the first end of the shaft. The magnetic shaft drive comprises or consists of the shaft that runs in a friction bearing arranged in a bearing block, e.g. as a cylindrical boring. At a first end section of the shaft, a shaft drive is connected, wherein optionally the shaft protrudes over the shaft drive, with the protruding end of the shaft adapted for arrangement in a recess of a lid, the recess forming a bearing for the shaft first end. The shaft drive is arranged between the first end of the shaft and the bearing block, and preferably a lid covers the shaft first end and the shaft drive and is connected, e.g. by friction fit and/or form fit to a section of the bearing block, e.g. the lid can be circumferentially clamped to the bearing block. The rotor is connected, e.g. by friction fit and/or form fit, to the second end of the shaft, opposite its first end. Preferably, the circumferential section of the bearing block that is opposite to the circumferential section of the bearing block that is clamped by the lid is adapted for clamping, e.g. by friction fit and form fit, to a first end cross sectional opening of the housing.

Preferably, the reaction vessel is provided as a kit-of-parts comprising or consisting of housing in which a stator is arranged abutting the stop face and held between the second section of the ribs with friction fit and/or form fit as a first portion, and as a second portion a bearing block holding in its bearing a shaft, with a shaft drive arranged at a first end section of the shaft, a rotor connected, e.g. by friction fit, to the opposite second end of the shaft, and a lid covering the shaft drive and connected to the bearing block, preferably by friction fit clamped to the circumferential surface of the bearing block, wherein preferably the first end of the shaft is run in a central recess of a lid, the shaft free end and the recess of a lid forming a second bearing, wherein a circumferential section of the bearing block is set up for friction fit, e.g. a clamping connection, to the first end cross sectional opening of the housing, especially for friction fit of a section of the bearing block inside the housing at its first end cross section.

Generally, the rotor, the circumferential collar of the rotor, the stator, the optional extension pipe, and the first bearing and the optional second bearing as well as the magnetic shaft drive are coaxial to the shaft, preferably all of the constituents of the vessel are coaxial to a common longitudinal axis, which is e.g. the longitudinal axis of the shaft.

In a detection section having two window sections, the window sections preferably are arranged at 90°, more preferably arranged parallel to one another in opposite sides of the housing wall. Generally, the stator is arranged with a spacing from the housing, which spacing of the stator from the housing is provided by the second sections of the ribs, the spacing forming a channel for liquid to flow in the spacing from one end section of the stator, e.g. from its first end cross-section, to the opposite end section of the stator, e.g. to its opening at its second end cross-section. Generally, the stator at its second end may have a tapering, e.g. funnel-shaped section that comprises the second end opening.

Preferably, the cross-sectional area of the extension pipe is at least as large as the cross-sectional area of the ring-shaped gap between the rotor and the stator. Preferably, the extension pipe at each of its cross-sections or levels is circular.

Preferably, the rotor is spaced from the bearing block so that for the spacing the shaft is not covered. The spacing of the bearing block from the rotor provides for less contamination of the bearing block by liquid contacting the rotor.

Preferably, the housing in its section between the level of the lid or of the first bearing, e.g. the level of first bearing arranged in the lid, and the level of the rotor, has a diameter which is smaller than the outer or the inner diameter of the stator, and/or smaller than the diameter of the rotor, especially smaller than the diameter of the circumferential collar of the rotor. Such a section of smaller diameter is also interchangeably referred to as a collar section of the housing. Preferably, in the collar section, especially covering the section of the housing between the lid or the first bearing, e.g. the first bearing arranged in the lid, and the rotor, the shaft is not covered by the first bearing nor by the rotor. In a process using the vessel, preferably liquid is introduced into the housing up to at maximum the smallest cross-section of the collar section, and preferably up to a level completely filling the annular gap between the rotor and the stator.

The housing at its first end section preferably has a recess along its inner wall, preferably of cylindrical cross-section, for receiving a cylindrical section of the bearing block, e.g. abutting against a second stop face of the bearing block, preferably with frictional fit, optionally including meshing of grooves and ridges of the outside of cylindrical side walls of the bearing block with grooves and ridges of the inside surface of the recess of the housing first end section. Preferably, the bearing block is fixed, e.g. clamped, to the lid, e.g. the bearing block is clamped inside a recess formed by cylindrical side walls of the lid. The inside wall section of the lid into which a section of the bearing block is arranged, e.g. abutting against a first stop face of the bearing block, may have grooves and ridges that are set up for meshing with grooves and ridges arranged on the outside surface of the bearing block.

The shaft preferably is a cylindrical stainless steel rod. Alternatively, the shaft can be a cylindrical rod of high-performance plastic.

The first bearing that is arranged in the bearing block can be a bore, the bore providing a friction bearing for the shaft, optionally with radial guidance only and/or without axial guidance. The magnetic shaft drive preferably comprises or consists of a holder containing magnets, ferromagnetic pins, or ferrimagentic pins, which holder is fixed, e.g. by clamping, to the shaft. The holder preferably has recesses for holding magnets, ferromagnetic pins, or ferrimagentic pins, preferably recesses for holding one pair or two pairs of magnets, ferromagnetic pins, or ferrimagentic pins. Along the shaft, the magnetic shaft drive is preferably arranged between the lid, the lid having a recess that forms a second bearing for the first end of the shaft, and the first bearing of the bearing block, which is e.g. clamped to both the housing and to the lid, so that the magnetic shaft drive holds the shaft between the bearing block and the lid also when the first bearing is a bore that allows the shaft to axially slide. For restraining the axial movement of the shaft in the first bearing, the magnetic shaft drive can be fixed to the shaft in a position, in which the magnetic shaft drive is arranged adjacent to the bearing block, e.g. that the magnetic shaft drive contacts the bearing block, and in which position the first end of the shaft runs in the second bearing with the front face of the shaft contacting the recess of the lid with sufficient gap for allowing the shaft to rotate. Preferably, the magnets are neodymium magnets, e.g. cylindrical magnets arranged in borings of the holder. Alternatively, other high performance magnets can be used, including high performance composite magnets fabricated by injection molding

Preferably, the shaft is a cylindrical metal rod, the magnets of the magnetic shaft drive are neodymium magnets, and all of the other constituents of the vessel are of synthetic resin, preferably optically transparent, e.g. polystyrene, polyethylene, polylactic acid, polyethylenterephthalate, polycarbonate, or acrylnitril-butadien-styrol, or nylon, or polypropylene.

Preferably, the constituents of synthetic resin that are fixed to one another by clamping on their surfaces that are sliding over one another e.g. when mounting the elements of the reaction vessel, have grooves that are in perpendicular to the central longitudinal axis, e.g. in perpendicular to the longitudinal axis of the shaft. The grooves are e.g. produced by additive manufacturing, preferably by 3D-printing of a liquified resin 3D-printing, for example using high precision fused deposition molding (FDM) technique, preferably during injection moulding.

The magnetic shaft drive is drivable by a magnetic drive that has correspondingly arranged magnets, preferably the same number of pairs of magnets as the shaft drive.

Preferably, the bearing block is connected to the lid, preferably inside a recess formed by cylindrical side walls of the lid, e.g. by clamping, and the bearing block is set up for connecting to the first end section of the housing by clamping. This allows the vessel to be provided as separate elements which are simple to connect by clamping without additional fixation means necessary, e.g. without additional glue, sealing or mechanical fastening devices.

For an analytical process, the vessel can be provided as a combination of
- a housing having at its second end section a detection section with at least one, preferably at least two optically transparent windows, the housing containing as a separate element the stator arranged by friction fit and/or form fit between the second sections of the ribs and abutting the stop face formed by a first section of at least one rib, wherein the ribs are formed in one piece with the housing, and the housing at its first end section having a recess set up for receiving a bearing block,
   and as a separate part
- a lid connected to a bearing block containing the shaft with the rotor fixed at its second end and the magnetic shaft drive fixed at its first end section, wherein the bearing block is set up for attaching with friction fit and/or form fit to the first end of the housing,
- with the step of inserting a liquid to be analyzed into the housing and subsequently arranging the bearing block at the first end of the housing, whereby the rotor is arranged co-axially within the stator,
- applying a rotating magnetic field to the magnetic shaft drive and optically analyzing the liquid through a detection window.

The reaction vessel has the advantage that it is set up to exert a shear force between the rotor and the stator and, by rotating the rotor, to provide a pumping action onto the liquid that results in a homogenous processing of the entire liquid within the vessel, resulting in presence of liquid that is representative for the entire liquid in the detection section of the housing. The circumferential collar extending over the radius of the cylindrical rotor section upon rotation can generate sufficient centrifugal force to the liquid for exerting a pumping action onto the liquid such that the liquid is moved through the gap between rotor and stator and exits at the first end of the stator, circulates through the channel formed by the spacing between the housing and the stator and then through the detection section and returns to the opening provided at the second end of the stator.

The pumping action is provided only by rotation of the rotor, and accordingly the driven, e.g. rotating, elements of the vessel preferably consist of the rotor arranged on the second end of the shaft and the shaft drive arranged on the first end of the shaft. Further, the vessel has the advantage of exerting significant shear force onto the liquid essentially only between the rotor and the stator, so that the shear force can be controlled by controlling the rotation speed of the rotor only, while the vessel is set up to avoid generating relevant shear forces outside of the defined ring-shaped gap between rotor and stator. Accordingly, the vessel is set up for subjecting liquid to maximal shear force only in the ring-shaped gap between rotor and stator. The vessel is set up for circulating the entire volume of the liquid through the ring-shaped gap between rotor and stator when rotating the rotor, exerting the maximal shear force for converting a native conformation prion protein to its aggregated state only in the ring-shaped gap between rotor and stator, while the flow of liquid through the vessel other than this ring-shaped gap does not provide shear force sufficient to significantly affect the conversion from native conformation prion protein to its aggregated state.

The ring-shaped gap between the rotor and the stator preferably is in the range between 5% and 100% of the radius of the rotor, and/or 0.1 mm to 1.0 mm in radial width . The shear stress is proportional to the rotation frequency of the rotor, the radius of the rotor, and the viscosity of the liquid, and the shear stress is inversely proportional to the gap width between rotor and stator.

Optionally, at least two vessels are arranged in parallel and are connected to one another, wherein their housings produced as one piece, e.g. by injection moulding. Therein, the at least two vessels that are parallel and connected to one another are arranged such that their optically transparent windows are arranged in common planes, e.g. their windows are arranged in a plane that is parallel to the line of the row along which the vessels are arranged in the arrangement.

Further, the invention provides for an analytical process in which a liquid sample is introduced into the vessel, preferably by introducing a sample into the housing and/or stator and subsequently arranging the rotor inside the stator, preferably by arranging a rotor mounted on a shaft that is run in a bearing block fixed in a lid, while arranging the bearing block at the first end section of the housing, rotating the magnetic shaft drive for rotating the rotor, optically detecting the sample at the detection section of the housing, and preferably transmitting the detection result or a medical indication derived from the detection result to the originator of the sample. The originator of the sample can be a medical laboratory, a physician or the patient from whom the sample was taken. Further, the analytical process can be used to determine the effect of a compound for its efficacy in retarding or reversing the formation of aggregated conformation prion protein by adding a compound to the sample or to an aliquot of the sample, and comparing the rate of formation of aggregated conformation prion protein during the process. Accordingly, the process can be used for analysing a sample originating from a patient by adding a compound suspected to have activity on the formation of aggregated conformation prion protein to the sample that originates from a specific patient for detecting the efficacy of the compound to at least delay aggregated prion protein formation in the sample of the originator. The efficacy of a compound to delay the formation of aggregated prion protein includes prevention of, retarding, suppressing and/or reversing the formation of aggregated prion protein. Therein, the process can be used to select a compound for its efficacy in delaying, e.g. retarding, supressing, preventing or reversing the formation of aggregated conformation prion protein for a specific patient sample. Generally, a sample can be a liquid or solid biopsy obtained from a patient, e.g. liquor, serum, tissue. Optionally, aliquots from the mixture containing the sample and the native prion protein can be removed from the vessel at different time points during the treatment within the vessel, e.g. by stopping the rotation of the rotor, removing an aliquot, optionally followed by further rotation of the rotor and again stopping the rotation and removing a further aliquot. Generally preferred, aliquots removed from the vessel can be frozen, e.g. for further analysis. The patient can be a human patient or, especially for research, an animal or a tissue culture. The process is an in vitro process or assay, and the process can be used as a translational assay system e.g. during drug discovery.

The process using the device of the invention can also be employed for screening and selecting compounds for their activity and efficacy in retarding, supressing or reversing the formation of aggregated conformation prion protein, the process comprising the step of introducing a liquid sample comprising native prion protein and/or aggregated conformation prion protein, and adding at least one compound to be screened into the housing and arranging the rotor inside the stator, rotating the magnetic shaft drive for rotating the rotor, optically detecting the sample at the detection section of the housing, for detecting a compound having activity for delaying the formation of aggregated prion protein.

The invention is now described in greater detail by way of an example and with reference to the figures, which schematically show in
- Fig. 1 a cross-section of an embodiment of the reaction vessel,
- Fig. 2 a cross-section B-B of Fig. 1,
- Fig. 3 a cross-section A-A of Fig. 1,
- Fig. 4 an exploded view of the reaction vessel, and
- Fig. 5 an exploded view of elements directly connected to the bearing block.

Generally, functionally identical elements are indicated by identical reference numerals.

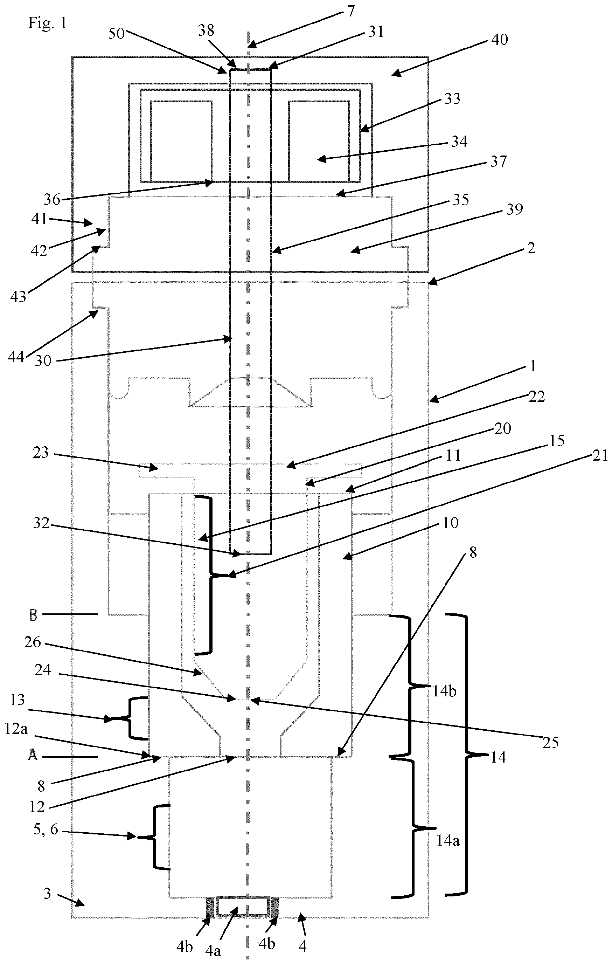

Fig. 1 shows a housing 1 having a first end 2 and an opposite second end 3, which is closed by a bottom wall 4. A detection section 5 is arranged at the second end 3 of the housing 1, which detection section 5 has at least one, preferably two opposite window sections 6, which are optically transparent. Optionally, the bottom wall 4 has a bottom window 4a of an optically transparent material, optionally with its central section encircled by a non-transparent bottom wall 4 forming a bottom aperture 4b.

Inside the housing 1, a stator 10 is arranged, which from its open first end cross-section 11 extends to an opening 12 at its opposite second end 12a, the stator 10 having a cylindrical inner surface 15. At the second end opening 12, the stator has terminal section 13 tapering to the opening 12, which discharges into the detection section 5 of the housing 1.

The stator 10 is held in the housing by friction fit between the second sections 14b of ribs 14. The stator 10 extends along surfaces of the second sections 14b of ribs 14. The outer surface of the stator 10 is cylindrical and, as the second sections 14b of the ribs 14 extend into the same distance to the central longitudinal axis 7, and respectively into the same distance from the inner surface of the housing 1, the stator 10 is held rotationally symmetrically between the second sections 14b and during assembly, the stator 10 can be moved along the central longitudinal axis 7 between the second sections 14b until abutting against the stop face 8 formed by the first sections 14a of the ribs 14.

The rotor 20 is arranged co-axially inside the stator 10, the spacing between rotor 20 and cylindrical inner surface of the stator 11 forming a ring-shaped gap, in which upon rotation of the rotor 20 shear force is applied to a liquid. The rotor 20 as a cylindrical section 21 which is arranged within the stator 10, and the cylindrical section 21 at its first end 22 has a terminal circumferential collar 23 extending over the radius of the cylindrical rotor section 21. The rotor collar 23 in accordance with a preferred embodiment also extends over the ring-shaped gap formed between the rotor 20 and the stator 10.

The opposite second end 24 of the rotor has a flat front surface 25 with a circumferential bevel 26.

The rotor 20 is arranged on the second end 32 of a shaft 30. Opposite the second end 32, the first end 31 of shaft 30 carries a magnetic shaft drive 33, which includes at least two magnets 34. The magnetic shaft drive 33 is fixed to the shaft 30, which runs in a first bearing 35 of the bearing block 39, wherein the shaft 30 optionally is axially displaceable. In the embodiment shown, the magnetic shaft drive 33 has a flat front surface 36 which can run with friction over an adjacent flat front surface 37 of the bearing block 39, which limits the axial movement of the shaft 30.

The bearing block 39 is clamped inside a cylindrical section 41 of a lid 40, which cylindrical section 41 abuts against a first stop face 43 of the bearing block 39. The lid 40 extends over the bearing block 39 and encloses the shaft drive 33. The bearing block 39 has a second stop face 44 which abuts against the front face at the first end 2 of the housing 1

The shaft 30 runs in the first bearing 35 of the bearing block 39 and at its first end 31 is attached by clamping to the magnetic shaft drive 33. The first end 31 of the shaft 30 in accordance with a preferred embodiment ends in a convex front surface 38, which runs in a corresponding recess 42 in the lid, the front surface 38 of shaft 30 forming a second bearing 50 with the corresponding recess 42 of lid 40.

In the embodiment shown, all the elements are arranged co-axially to the central longitudinal axis 7 of the shaft 30.

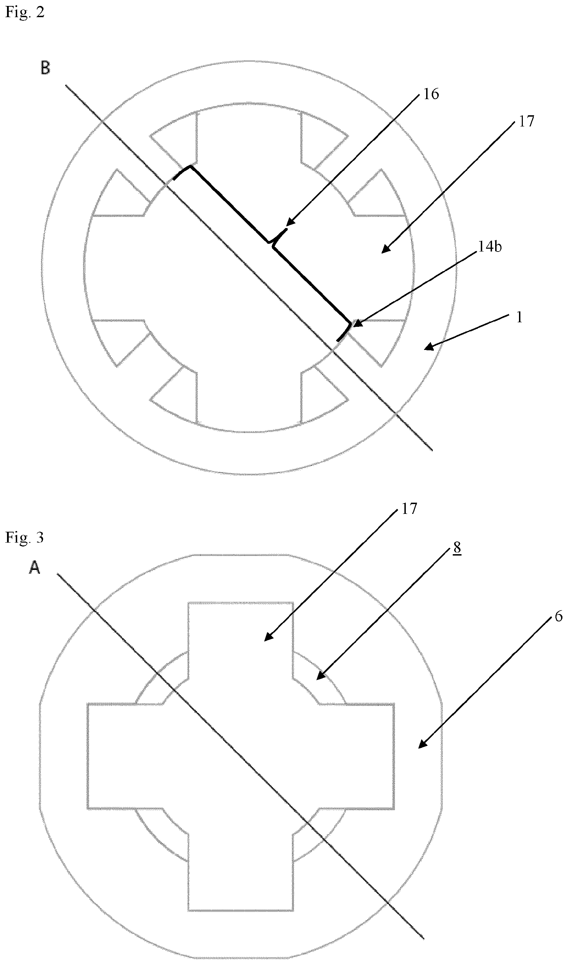

Fig. 2 shows a cross-section B-B of the second section 14b of ribs 14, which between them by friction fit clamp the stator 10, in which with a spacing the rotor 20 is arranged coaxially. Between the outer surface of the stator 10 and the housing 1, limited by the ribs 14, a channel 17 is opened up, which channel 17 is in fluid connection with the open first end cross section of the stator 11, passes along the outside of the stator 10 and is in fluid connection with the detection section 5 and with the opening 12 of the second end 12a of the stator 10. The second sections 14b of the ribs 14 delimit a central opening 16 that is set up for receiving with frictional fit a stator 10.

Fig. 3 shows a cross-section A-A at the stop faces 8, which are formed by the first sections 14a of ribs 14 extending further towards the central longitudinal axis 7 than the second sections 14b. Upon arrangement of a stator 10 abutting with its second end 12a against the stop faces 8, the channel 17 is formed by the housing 1, the outer surface of the stator 10, and between the first sections 14a of ribs 14.

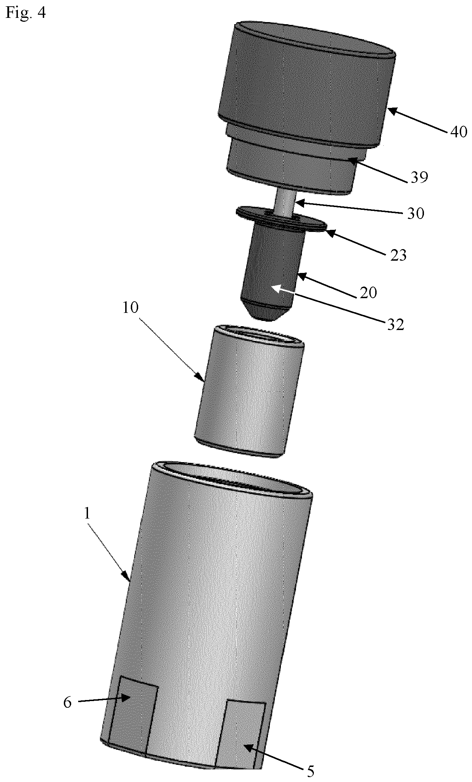

Fig. 4 in exploded view shows a preferred pre-assembled element of the vessel, which element comprises or consists of the rotor 20 attached to the second end 32 of the shaft 30, which is run in the first bearing of bearing block 39, to which the lid 40 is connected by friction fit. The lid 40 covers the magnetic shaft drive 33 that is arranged adjacent the first end 31 of the shaft 30. As the other pre-assembled element for producing the vessel, a housing 1 is provided with the stator 10 arranged between the second sections 14b of ribs 14 inside the housing 1.

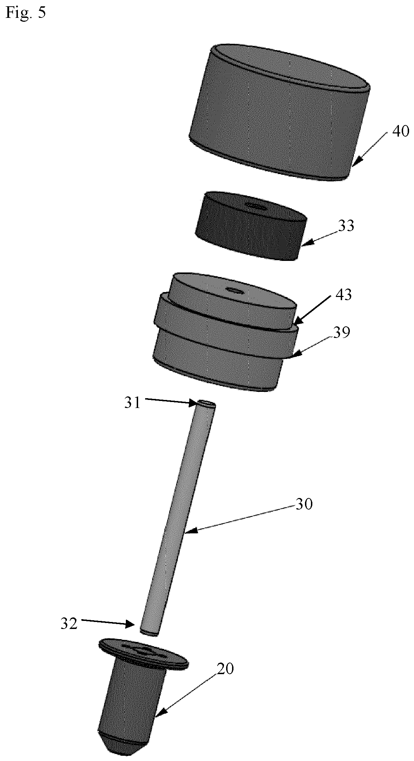

Fig. 5 in exploded view shows the single elements that are attached to one another, preferably by friction fit, the shaft 30, the rotor 20 for arrangement at the second end 32 of the shaft 30, the bearing block 39 with a bore that forms a first bearing 35 for the shaft 30, a magnetic shaft drive 33 for arrangement at the first end 31 of the shaft 30, and a lid 40 for clamping to the bearing block 39 and to abut against its first stop face 43.

### Example: Analytical process for detecting the influence of shear force onto a sample with optical detection

As an exemplary sample, a recombinant aggregated prion protein derived from a shear-force induced reaction of recombinant native prion protein with a post-mortem brain homogenate sample originating from a synucleopathy disease patient was mixed at a dilution of 1/100000 with 1.5 mg/ml native conformation human α-synuclein in PBS containing 1% Triton X-100 (positive control). The buffer composition and the procedural details were analogous to the previous disclosures WO 2012/110570 A1 and WO 2016/001334 A1. The Fluorophore used for aggregated prion protein detection was Thioflavin T. As a negative control, the same reaction composition was used without the addition of recombinant aggregated prion protein. The vessel generally corresponded to Fig. 1. The gap width between the stator and the rotor was 0.3 mm and the diameter of the rotor was 3 mm. The utilized processing frequency was 400 revolutions per second (400 Hz) and the reaction temperature was set to 30°C, corresponding to a shear-rate of 12570 per second and to a shear-stress of 11.2 pascal. Overall, the reaction was followed for 15 hours corresponding to 180 cycles of processing and resting. In each cycle, the processing was applied for three seconds, followed by a resting phase of 297 seconds. Fluorescence signals of Thioflavin T were accumulated during the resting phase of each cycle to detect the build-up of aggregated prion protein. For each, positive control and negative control, data-traces for 15 replicas were recorded.

In the positive controls, aggregated conformation prion protein was building up after about 4 hours (± 0,5 hours). In the negative control, aggregated conformation prion protein was beginning to build up after about 14 hours in some replicas, while most did not show signs of aggregated conformation prion buildup during the time of observation. The measurement results are shown in Fig. 4, with the positive controls (left) and negative controls (right). As the aggregated conformation buildup occurred in a reproducible manner, individual measurements overlap.

Generally, detection can be measured through the detection section of the vessel by the change of fluorescence of a fluorescent dye added to the mixture, the dye being specific for aggregated conformation prion protein. Exemplary dyes are e.g. Thioflavin T, Thioflavin S, Congo Red, thiophene-based amyloid ligands like luminescent conjugated polythiophenes (LCP), polythiophene acetic acid (PTAA) and luminescent conjugated oligothiophenes (LCO), Pittsburgh compound B, Aminonaphthalene 2-Cyanoacrylate (ANCA) probes, pegylated phenylbenzoxazole derivatives, Pinacyanol, Chrysamine G, and dyes containing at least one of the following scaffolds: Chalcone, Flavone, Aurone, Stilbene, Diphenyl-1,2,4-oxadiazole, Diphenyl-1,3,4-oxadiazole, Benzothiazole, Benzooxazole, Benzofuran, Imidazopyridine, Benzimidazole, Quinoline, Naphthalene.

In the alternative, the native conformation prion protein can be labelled with a fluorescent dye, e.g. by binding of a fluorescent dye to the native conformation prion protein directly or by an intermediate spacer, e.g. fluorophore derivatives that contain reactive chemical groups such as isothiocyanates (reactive to primary amines, e.g. Lysines), succinylimide esters (reactive towards amino groups to form amido bonds, e.g. N-terminal amino acids), maleimide (reactive to free sulfhydryl groups, e.g. cysteine). Such fluorophore derivatives include cyanines, flurescein, rhodamine, Alexa Fluors, Dylight fluors, ATTO-Tec Dyes, BODIPY Dyes, SETA Dyes, SeTau Dyes, DYOMICS Dyes.

**Reference numerals:**

| | | | |
|---|---|---|---|
| 1 | housing | 34 | magnet |
| 2 | first end of housing | 35 | first bearing |
| 3 | second end of housing | 36 | front surface of magnetic shaft drive |
| 4 | bottom wall | 37 | front surface of bearing block |
| 4a | bottom window | 38 | front surface of shaft |
| 4b | bottom aperture | 39 | bearing block |
| 5 | detection section | 40 | lid |
| 6 | window section | 41 | cylindrical section of lid |
| 7 | central longitudinal axis | 42 | recess in lid |
| 8 | stop face | 43 | first stop face of the bearing block |
| 10 | stator | 44 | second stop face of the bearing block |
| 11 | first end of stator | 50 | second bearing |
| 12 | opening at second end cross-section of stator | | |
| 12a | second end of stator | | |
| 13 | terminal section tapering to an opening | | |
| 14 | rib | | |
| 14a | first section of rib | | |
| 14b | second section of rib | | |
| 15 | cylindrical inner surface of stator | | |
| 16 | central opening | | |
| 17 | channel | | |
| 20 | rotor | | |
| 21 | cylindrical section of rotor | | |
| 22 | first end of rotor | | |
| 23 | collar of rotor | | |
| 24 | second end of rotor | | |
| 25 | front surface of rotor | | |
| 26 | bevel | | |
| 30 | shaft | | |
| 31 | first end of shaft | | |
| 32 | second end of shaft | | |
| 33 | magnetic shaft drive | | |

## Claims

1. Reaction vessel for use in the analysis of a sample comprising
- a housing (1) which extends along a central longitudinal axis (7), the housing (1) having a first end (2) for connecting to a lid (40) and an opposite second end (3) closed by a bottom wall (4), a detection section (5) arranged at the second end (3), the detection section (5) comprising at least one window section (6) in the housing wall, wherein the at least one window section (6) is optically transparent,
- the housing (1) containing at least three ribs (14) that extend inside the housing (1) along the housing wall and project towards the central longitudinal axis (7), the ribs (14) adjacent the housing first end (2) having a first section (14a) and adjacent thereto having a second section (14b), the second sections (14b) of the ribs (14) extending towards the longitudinal axis (7) and with the first section (14a) of at least one of the ribs (14) extending further towards the longitudinal axis than its second section (14b), with a stop face (8) formed between the first section (14a) and the second section (14b) of at least one the ribs (14),
- a stator (10) which is arranged inside the housing (1), which stator (10) has a cylindrical inner surface (15) for receiving a rotor (20) with a constant spacing, the cylindrical surface (15) having an open first end cross-section (11) and an opening (12) at its opposite second end (12a), wherein the outer surface of the stator (10) is arranged with a spacing from the housing (1), wherein the stator (10) with frictional fit and/or form fit is arranged with its first end (11) abutting the stop face (8), wherein the stator (10) is arranged with frictional fit and/or with form fit between the second sections (14b) of at least three ribs (14), wherein the ribs (14), the stator (10) and the housing (1) wall delimit a channel (17) outside of the stator (10), which channel (10) at both of its ends has open terminal cross-sections,
- a rotor (20) having a cylindrical section arranged within the stator (10) with a spacing forming a ring-shaped gap of constant radius, the rotor (20) having a second end (24) that covers the second end (32) of the shaft (30)
- wherein the cross-section at the first end (2) of the housing (1) is covered by a one-piece bearing block (39) containing a first bearing (35) with a shaft (30), the first end (31) section of which shaft (30) is connected to a shaft drive (33) and the opposite second end (32) of the shaft (30) is connected to the rotor (20), wherein the bearing block (39) is connected to the housing (1) by form fit and/or frictional fit,
- the shaft (30) having a first end (31) to which a shaft drive (33) is fixed and an opposite second end (32) covered by and fixed to the rotor (20), wherein the shaft (30) is run in a first bearing (35) of the bearing block (39) and the first end (31) of the shaft (30) is a free end that is arranged in a recess (42) of the lid (40), the shaft free end and the recess of the lid (40) forming a frictional bearing,
- wherein the shaft (30), the shaft drive (33), the first bearing (35), the rotor (20), the stator (10) are arranged co-axially about one longitudinal axis (7),
- wherein the lid is connected to the bearing block (39) and/or to the housing (1) by form fit and/or frictional fit.

2. Vessel according to claim 1, **characterized in that** the housing (1) and the ribs (14) are one piece and the stator (10) is held between the second sections (14b) of the ribs (14) by friction fit.

3. Vessel according to one of the preceding claims, **characterized in that** the first section (14a) and the second section (14b) of each rib (14) are arranged in parallel to the central longitudinal axis (7).

4. Vessel according to one of the preceding claims, **characterized in that** the outer circumferential surface of the stator (10) is cylindrical and the terminal cross-sections of the stator (10) consist of ring-shaped surfaces in perpendicular to the central longitudinal axis (7).

5. Vessel according to one of the preceding claims, **characterized in that** the rotor (20) at its first end (22) has a terminal circumferential collar (23) extending over the radius of the cylindrical rotor (20) section and the collar (23) with a spacing from the stator (10) extends over the first end (11) cross-sectional opening of the stator (10).

6. Vessel according to one of the preceding claims, **characterized in that** the bearing block (39) has a first stop face (43) that abuts against the lid (40) and an opposite second stop face (44) that abuts against the first end (2) of the housing (1).

7. Vessel according to one of the preceding claims, **characterized in that** the bearing block (39) is arranged on the shaft (30) in an axial section arranged between the shaft drive (33) and the rotor (20).

8. Vessel according to one of the preceding claims, **characterized in** the lid (40) having a cylindrical section (41) of side walls forming a recess arranged coaxially to the housing (1), with the cylindrical side walls clamping to a cylindrical section (7) of the first end section (2) of the housing (1).

9. Vessel according to one of the preceding claims, **characterized in that** the collar (23) extends over the ring-shaped gap formed between the rotor (20) and the stator (10).

10. Vessel according to one of the preceding claims, **characterized in that** the first end (31) of the shaft (30) is a free end that is arranged in a recess (42) of the lid (40), the shaft free end (31) and the recess (42) of the lid (40) forming a second bearing (50), which is a frictional bearing.

11. Vessel according to one of the preceding claims, **characterized in that** it is provided as an element comprising the housing (1), the stator (10) arranged inside the housing (1), the detection section (5), and as a separate element, the lid (40) connected to the bearing block (39) comprising a first bearing (35) in which the shaft (30) is run, to the first end (31) of which a magnetic shaft drive (33) is attached which is arranged between the first bearing (35) and the lid (40), and wherein the first end (31) of the shaft (30) is a free end that is arranged in a recess (42) of the lid (40), the shaft free end (31) and the recess (42) of the lid (40) forming a second bearing (50), with the rotor (20) attached to the second end (32) of the shaft (30).

12. Vessel according to claim 11, **characterized in that** the housing (1) at its first end (2) has a cylindrical section that is adapted to receive the bearing block (39) with clamping fit.

13. Process for analysing a sample originating from a patient for detecting presence of aggregated prion protein using a vessel according to one of claims 1 to 12, comprising the step of introducing the sample and a native prion protein into the housing, arranging the rotor inside the stator, rotating the magnetic shaft drive for rotating the rotor, optically detecting the sample at the detection section of the housing, and transmitting the detection result or a medical indication derived from the detection result to the originator of the sample.

14. Process for analysing a sample originating from a patient according to claim 13, comprising adding a compound to the sample originating from the patient for detecting the efficacy of the compound to delay, or suppress, or revert aggregated prion protein formation in the sample of the originator.

15. Process for screening compounds for activity in suppressing formation of aggregated prion protein, using a vessel according to one of claims 1 to 12, comprising the step of introducing a liquid sample comprising native prion protein and/or aggregated conformation prion protein, and adding at least one compound to be screened into the housing and arranging the rotor inside the stator, rotating the magnetic shaft drive for rotating the rotor, optically detecting the sample at the detection section of the housing, for detecting a compound having activity for delaying, supressing or reverting the formation of aggregated prion protein.
